# EUROPEAN PATENT APPLICATION

(11) **EP 4 779 722 A1**
(43) Date of publication of application: **22.07.2026**
(21) Application number: 24865879.1
(22) Date of filing: 12.09.2024
(51) Int. Cl.: H01M 4/62, H01M 4/139, H01M 10/42, H01M 10/052, H01M 4/02

(54) **POSITIVE ELECTRODE SLURRY, POSITIVE ELECTRODE, AND SECONDARY BATTERY**

(30) Priority: 12.09.2023 KR 20230120817
(71) Applicant: Seoul National University R&DB Foundation, Seoul 08826 (KR)
(72) Inventor: CHOI, Jang Wook, Seoul 06737 (KR); HWANG, Insu, Seoul 08801 (KR); CHANG, Barsa, Seoul 08791 (KR); NOH, Gyeongho, Chungcheongbuk-do 28633 (KR)
(74) Representative: Schön, Christoph
(86) International application number: PCT/KR2024/013917
(87) International publication number: WO 2025/058440

(57) **Abstract**

A cathode slurry having improved cycle life and rate characteristics of a cathode is provided. According to one aspect of the present invention, there is provided a cathode slurry including a polysaccharide binder; an organic acid; a cathode active material; a conductive material; and an aqueous solvent, wherein the organic acid includes a carboxyl group and a sulfonic acid group.

## Description

### TECHNICAL FIELD

The present invention relates to a cathode slurry, and more particularly, relates to a cathode slurry, a cathode, and a secondary battery.

### BACKGROUND ART

As the application range of a secondary battery as a driving power source is expanded, in its development, while energy increase is promoted, such as search of an active material having a high theoretical capacity or expansion of a driving voltage range, a battery that stably operates in a wide temperature range is required. Accordingly, securing cycle life or safety is becoming a task with higher difficulty.

On the other hand, in a cathode having a low volumetric expansion rate during charging and discharging, compared to an anode, rather than binding property, resistance and chemical stability of a binder more greatly affect battery characteristics, and thus a development direction may be largely different. For example, when an aqueous binder is applied to the cathode as it is, problems of resistance increase due to coating property and oxidative deterioration may occur.

Accordingly, it was difficult to change a binder from a non-aqueous system to an aqueous system for improvement of cycle characteristics, and a slurry in which polyvinylidene fluoride (PVDF) is dispersed in N-methyl-2-pyrrolidone (NMP) is still used. However, in charging and discharging cycles under high temperature and high voltage, this also had problems in that gas generation or electrode peeling occurs due to PVDF decomposition, and NMP used as a solvent had a problem in that it is harmful to a human body.

### DISCLOSURE OF THE INVENTION TECHNICAL PROBLEM

An object of the present invention is to provide a cathode slurry capable of solving a Li leaching problem and a corrosion problem of a current collector, which can occur in a cathode slurry including an aqueous solvent.

Another object of the present invention is to provide a cathode slurry harmless to a human body by using an aqueous solvent.

Still another object of the present invention is to provide a cathode capable of lowering resistance of an electrode and at the same time extending cycle life of a secondary battery.

Still another object of the present invention is to provide a cathode having excellent electrochemical performance.

Still another object of the present invention is to provide a secondary battery including the cathode.

The objects of the present invention are not limited to the objects mentioned above, and other objects and advantages of the present invention not mentioned can be understood by the following description and will be more clearly understood by embodiments of the present invention. In addition, it will be readily understood that the objects and advantages of the present invention can be realized by means and a combination thereof indicated in the claims.

### TECHNICAL SOLUTION

According to a first aspect of the present invention for achieving the above object, there is provided a cathode slurry including a polysaccharide binder; an organic acid; a cathode active material; a conductive material; and an aqueous solvent, wherein the organic acid includes a carboxyl group and a sulfonic acid group.

According to a second aspect of the present invention, in the first aspect, a weight-average molecular weight (M_{w}) of the polysaccharide binder may be 90,000 to 1,500,000 g/mol. Alternatively or additionally, a degree of substitution (DS) of the polysaccharide binder may be 0.6 to 1.2, 0.7 to 1.1, or 0.7 to 0.9. For example, the degree of substitution may mean an average number of substituted carboxymethyl groups with respect to one anhydroglucose unit.

According to a third aspect of the present invention, in the first or second aspect, in one molecule of the organic acid, the number of the carboxyl group and the number of the sulfonic acid group may be identical to each other.

According to a fourth aspect of the present invention, in any one of the first to third aspects, the organic acid may be a compound represented by the following General Formula 1.

### [General Formula 1]

In General Formula 1, R includes a hydrogen atom, or -R₁-COOH, and the R₁ may 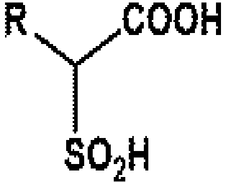 include a substituted or unsubstituted main-chain linker having 1 to 5 carbon atoms.

According to a fifth aspect of the present invention, in any one of the first to fourth aspects, the organic acid may be any one selected from the group consisting of sulfosuccinic acid, sulfoacetic acid, and a combination thereof.

According to a sixth aspect of the present invention, in any one of the first to fifth aspects, a content of the organic acid may be 0.1 to 2 wt% based on a weight of total solid content included in the cathode slurry.

According to a seventh aspect of the present invention, there may be provided a cathode slurry further including a dispersant.

According to an eighth aspect of the present invention, there is provided a cathode including a current collector; and a cathode active material layer on the current collector, wherein the cathode active material layer includes a polysaccharide binder including one or more side chains, a cathode active material, and a conductive material, and the one or more side chains include an ester group and a sulfonic acid group.

According to a ninth aspect of the present invention, in the eighth aspect, the one or more side chains may further include a carboxyl group.

According to a tenth aspect of the present invention, there is provided a secondary battery including: the cathode according to the eighth or ninth aspect; an anode; a separator interposed between the cathode and the anode; and an electrolyte.

The means for solving the above problem does not enumerate all features of the present invention. Various features of the present invention and advantages and effects according thereto will be understood in more detail with reference to the specific embodiments below.

### ADVANTAGEOUS EFFECTS

According to one aspect of the present invention, it is possible to solve a Li leaching problem and a corrosion problem of a current collector, which can occur in a cathode slurry including an aqueous solvent.

According to another aspect of the present invention, it is possible to provide a cathode capable of lowering resistance of an electrode and at the same time extending cycle life of a secondary battery.

According to still another aspect of the present invention, it is possible to provide a cathode harmless to a human body and having excellent electrochemical performance.

Along with the above-described effects, specific effects of the present invention will be described together below while describing specific details for carrying out the invention.

### BRIEF DESCRIPTION OF THE DRAWINGS

FIG. 1a is a structural formula of a polysaccharide binder-organic acid according to one embodiment of the present invention. FIG. 1b is a structural formula of the polysaccharide binder of FIG. 1a. FIG. 1c is a structural formula of the organic acid of FIG. 1a.
FIG. 2a illustrates discharge capacity according to cycles of a half-cell according to Example 1 and a Reference Example under a cut-off voltage of 4.5 V and a 0.5C condition.
FIG. 2b illustrates specific capacity according to potential of a half-cell according to Example 1 and a Reference Example under a 0.5C and 2nd cycle condition.
FIG. 3 illustrates specific capacity and coulombic efficiency of a half-cell according to Example 1 and a Reference Example according to the number of cycles.
FIG. 4a illustrates specific capacity of a half-cell according to Example 1 and a Reference Example according to the number of cycles.
FIG. 4b illustrates discharge capacity of a half-cell according to Example 1 and a Reference Example according to the number of cycles.
FIG. 5 illustrates discharge capacity according to the number of cycles of a half-cell according to Examples 1 and 2, Comparative Examples 1 to 3, and a Reference Example.
FIG. 6a illustrates discharge capacity of a half-cell according to Examples 1, 3, and 4 and a Reference Example.
FIG. 6b illustrates specific capacity according to potential of a half-cell according to a Reference Example, and Examples 1, 3, and 4.
FIG. 7a is an SEM (Scanning Electron Microscope) photograph of a surface of a cathode manufactured by a method according to a Reference Example.
FIG. 7b is an SEM photograph of a surface of a cathode manufactured by a method according to Example 5.
FIG. 7c is an SEM photograph of a surface of a cathode manufactured by a method according to Example 1.
FIG. 7d is an SEM photograph of a surface of a cathode manufactured by a method according to Example 6.
FIG. 8 illustrates FT-IR (Fourier Transform Infrared Spectroscopy) of a polysaccharide binder-organic acid manufactured by a method according to Example 1 when a drying temperature of a cathode slurry is different as 60°C and 120°C, respectively.
FIG. 9 illustrates a peeling test of peeling force of a cathode active material layer with respect to a current collector in a cathode manufactured by a method according to a Reference Example and Example 1.
FIG. 10a illustrates respective TM-O peaks when a concentration of a polysaccharide binder is 1, 2, and 5 wt% based on a total weight of solids in a cathode manufactured by a method according to Example 1. FIG. 10b illustrates respective TM-O peaks when a concentration of a polysaccharide binder is 1, 2, and 5 wt% based on a total weight of solids in a cathode manufactured by a method according to a Reference Example.
FIG. 11a is a graph regarding an imaginary part of impedance Z" according to a real part of impedance Z' of a pristine electrode according to Example 1 and a Reference Example. FIG. 11b is a graph regarding an imaginary part of impedance Z" according to a real part of impedance Z' of an electrode according to Example 1 and a Reference Example according to the number of cycles.

### MODE FOR CARRYING OUT THE INVENTION

In the present specification, a singular expression includes a plural expression unless the context clearly indicates otherwise.

In the present specification, a numerical range expressed by using the term "to" indicates a numerical range including values described before and after the term as a lower limit value and an upper limit value, respectively. When numerical values as an upper limit and a lower limit of any numerical range are each disclosed in plural, a numerical range disclosed in the present specification may be understood as any numerical range having any one value among the plurality of lower limit values and any one value among the plurality of upper limit values as a lower limit value and an upper limit value, respectively.

In the present specification, "polysaccharide binder-organic acid" may be defined as a single compound in which a polysaccharide and an organic acid are chemically bonded to each other. For example, a hydroxy group included in one or more side chains of the polysaccharide may react with a carboxyl group of the organic acid to form an ester bond.

According to one aspect of the present invention, there is provided a cathode slurry including a polysaccharide binder; an organic acid; a cathode active material; and an aqueous solvent, wherein the organic acid includes a carboxyl group and a sulfonic acid group.

According to one aspect of the present invention, by adding an organic acid including a carboxyl group and a sulfonic acid group to a cathode slurry including an aqueous solvent, it is possible to increase coverage of a polysaccharide binder-organic acid with respect to a surface of a cathode active material. Accordingly, it is possible to form a CEI (Cathode electrolyte interphase) having excellent performance to lower resistance of an electrode and at the same time improve cycle life characteristics of a secondary battery. Specifically, the carboxyl group of the organic acid can increase adhesion between a current collector and a cathode active material layer, and the sulfonic acid group of the organic acid can implement excellent lithium ion conductivity. According to another aspect of the present invention, by combination of the carboxyl group and the sulfonic acid group of the organic acid, it is possible to suppress Li leaching by removing residual lithium on the surface of the cathode active material, and a corrosion problem of the current collector is solved as pH of the cathode slurry is adjusted to an appropriate level. If an organic acid including only a carboxyl group alone; or an organic acid including only a sulfonic acid group alone is added to the cathode slurry, the above performances may not be sufficiently achieved.

Hereinafter, the configuration of the present invention will be described in more detail

### 1. Cathode Slurry

The cathode slurry according to the present invention includes a polysaccharide binder in order to increase adhesion between cathode active material particles and between a cathode active material layer and a current collector.

The polysaccharide binder according to the present invention may include a polymer chain of a ring structure forming a main backbone and one or more side chains bonded to the main backbone. Specifically, one or more side chains of the polysaccharide binder may include a hydroxy group.

For example, the polysaccharide binder may include one or more selected from the group consisting of alginic acid, carboxymethyl cellulose or a salt thereof, carboxymethyl starch, carboxymethyl guar gum, carboxymethyl xanthane gum, carboxymethyl tara gum, low methoxyl pectin, carrageenan, cellulose, amylose, chitosan, glucose, sucrose, maltose, lactose, starch, and glycogen.

According to one embodiment of the present invention, a weight-average molecular weight of the polysaccharide binder may be 90,000 to 1,500,000 g/mol, 90,000 to 1,200,000 g/mol, 150,000 to 850,000 g/mol, 450,000 to 850,000 g/mol, or 500,000 to 800,000 g/mol. When the weight-average molecular weight of the polysaccharide binder is less than the numerical range, a problem may occur in that adhesion between the current collector and the cathode active material layer is not sufficiently increased, and when it exceeds the numerical range, a problem may occur in that viscosity of the cathode slurry is increased to block an ion transfer path.

A content of the polysaccharide binder according to the present invention may be 0.5 to 10 wt%, specifically 1.0 to 5.0 wt%, based on a weight of total solid content included in the cathode slurry. Specifically, when the content of the polysaccharide binder satisfies within the numerical range, sufficient adhesion between the current collector and the cathode active material layer can be implemented.

The organic acid according to the present invention can increase coverage of a cathode binder with respect to a surface of a cathode active material. Accordingly, it is possible to form a CEI (Cathode electrolyte interphase) having excellent performance to lower resistance of an electrode and at the same time improve cycle life characteristics of a secondary battery. In addition, the organic acid according to another aspect of the present invention suppresses Li leaching by removing residual lithium, and a corrosion problem of a current collector is solved as pH of the cathode slurry is adjusted to an appropriate level.

The organic acid according to the present invention includes a carboxyl group (-COOH) and a sulfonic acid group (-SO₃H). Specifically, the carboxyl group of the organic acid can increase adhesion between a current collector and a cathode active material layer, and the sulfonic acid group of the organic acid can implement excellent lithium ion conductivity. If an organic acid including only a carboxyl group alone; or an organic acid including only a sulfonic acid group alone is added to the cathode slurry, electrochemical performance and cycle life characteristics of a secondary battery may not be sufficiently achieved.

The organic acid according to the present invention can be bonded by reacting with a functional group bonded to a side chain of a polysaccharide as the cathode slurry is dried at a high temperature (e.g., 120°C). For example, the functional group bonded to the side chain of the polysaccharide may be a hydroxy group. Here, the hydroxy group may react with the carboxyl group of the organic acid to form an ester group (COO). According to some embodiments of the present invention, as the organic acid and the polysaccharide binder react to form an ester group, it is possible to remarkably increase adhesion of a cathode active material layer with respect to a cathode current collector.

According to one embodiment of the present invention, in one molecule of the organic acid, the number of the carboxyl group and the number of the sulfonic acid group may be identical to each other. According to one embodiment of the present invention, long-term cycle stability can be sufficiently implemented as the number of the carboxyl group and the number of the sulfonic acid group is adjusted to be identical to each other in one molecule.

According to some embodiments of the present invention, the organic acid may be a compound represented by the following General Formula 1.

### [General Formula 1]

In General Formula 1, R includes a hydrogen atom and -R₁-COOH, and the R₁ may 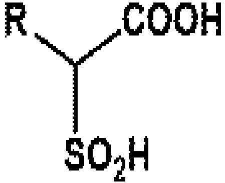 include a substituted or unsubstituted main-chain linker having 1 to 5 carbon atoms. Here, the substituted or unsubstituted main-chain linker having 1 to 5 carbon atoms may include, for example, a main-chain structure consisting of -(CH₂)n- (n is an integer of 1 to 5). Here, since 1 to 5 carbon atoms are the number of carbon atoms of the "main-chain linker", a total number of carbon atoms of R may exceed 5 depending on a substituted structure. Specifically, a functional group substituted on the linker having 1 to 5 carbon atoms may be defined such that at least one hydrogen atom bonded to the main-chain structure is replaced with any one selected from the group consisting of an alkylthiol group, an alkoxy group, an ether group, an acetal group, a linear or branched alkyl group, a linear or branched alkenyl group, a cycloalkyl group, a heterocycloalkyl group, an allyl group, a benzyl group, an aryl group, a heteroaryl group, derivatives thereof, and a combination thereof.

For example, the organic acid may be any one selected from the group consisting of sulfosuccinic acid, sulfoacetic acid, and a combination thereof.

A content of the organic acid according to the present invention may be 0.1 to 2.0 wt%, 0.3 to 1.6 wt%, 0.4 to 1.3 wt%, 0.5 to 1.2 wt%, 0.6 to 1.1 wt%, 0.7 to 1.0 wt%, 0.8 to 0.9 wt%, or 0.80 to 0.85 wt%, based on a weight of total solid content included in the cathode slurry. Specifically, when the content of the organic acid satisfies within the numerical range, adhesion between the cathode active material layer and the cathode current collector can be sufficiently increased, and cycle life characteristics and electrochemical performance of a secondary battery can be excellent.

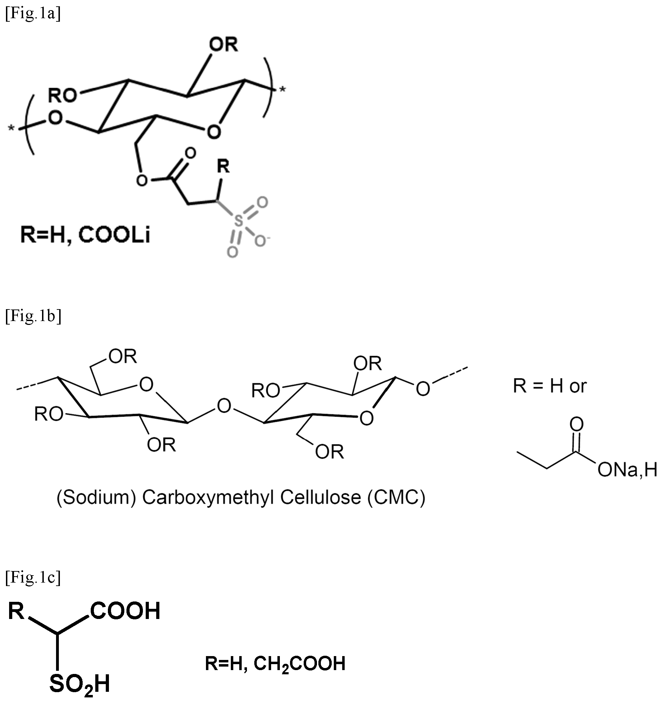

FIG. 1a is a structural formula of a polysaccharide binder-organic acid according to one embodiment of the present invention. FIG. 1b is a structural formula of the polysaccharide binder of FIG. 1a. FIG. 1c is a structural formula of the organic acid of FIG. 1a.

Referring to FIGS. 1a to 1c, under a high drying temperature condition of the cathode slurry, a -CH₂OH group bonded to one side chain of the polysaccharide and a carboxyl group (COOH) of the organic acid may react with each other to form an ester bond (-COO-).

The cathode slurry according to the present invention includes a cathode active material capable of providing lithium ions, and the cathode active material may include a lithium transition metal oxide including nickel, cobalt, and manganese, wherein the lithium transition metal oxide may be one or more selected from the group consisting of Liₓ₁CoO₂ (0.5 < x1 < 1.3), Liₓ₂NiO₂ (0.5 < x2 < 1.3), Liₓ₃MnO₂ (0.5 < x3 < 1.3), Liₓ₄Mn₂O₄ (0.5 < x4 < 1.3), Liₓ₅(Niₐ₁Co_{b1}Mn_{c1})O₂ (0.5 < x5 < 1.3, 0 < a1 < 1, 0 < b1 < 1, 0 < c1 < 1, a1 + b1 + c1 = 1), Liₓ₆Ni_{1-y1}Co_{y1}O₂ (0.5 < x6 < 1.3, 0 < y1 < 1), Liₓ₇Co_{1-y2}Mn_{y2}O₂ (0.5 < x7 < 1.3, 0 ≤ y2 < 1), Liₓ₈Ni_{1-y3}Mn_{y3}O₂ (0.5 < x8 < 1.3, 0 ≤ y3 < 1), Liₓ₉(Niₐ₂Co_{b2}Mn_{c2})O₄ (0.5 < x9 < 1.3, 0 < a2 < 2, 0 < b2 < 2, 0 < c2 < 2, a2 + b2 + c2 = 2), Liₓ₁₀Mn_{2-z1}Ni_{z1}O₄ (0.5 < x10 < 1.3, 0 < zl < 2), and Liₓ₁₁Mn_{2-z2}Co_{z2}O₄ (0.5 < x11 < 1.3, 0 < z2 < 2).

For example, the cathode active material may include a lithium transition metal phosphate. The lithium transition metal phosphate may be, for example, one or more selected from the group consisting of Liₓ₁₂FePO₄ (0.5<x12<1.3), Liₓ₁₃CoPO₄ (0.5<x13<1.3), Liₓ₁₄Mn_{1-w1}Fe_{w1}PO₄ (0.5<x14<1.3, 0.15<w1<0.85), Liₓ₁₅Mnₐ₃Fe_{b3}Al_{c3}PO₄ (0.5<xl5<1.3, a3+b3+c3=1), Liₓ₁₆Mnₐ₄Fe_{b4}Mg_{c4}PO₄ (0.5<x16<1.3, a4+b4+c4=1), Liₓ₁₇Mnₐ₅Fe_{b5}Zn_{c5}PO₄ (0.5<x17<1.3, a5+b5+c5=1), and Liₓ₁₈Mnₐ₆Fe_{b6}V_{c6}PO₄ (0.5<x18<1.3, a6+b6+c6=1).

In another example, the cathode active material may include a lithium transition metal oxide including aluminum. Specifically, the cathode active material may be one or more selected from the group consisting of Liₓ₁₉(Niₐ₇Co_{b7}Al_{c7})O₂ (0.5<x19<1.3, 0<a7<1, 0<b7<1, 0<c7<0.15, a7+b7+c7=1), Liₓ₂₀(Niₐ₈Mn_{b8}Al_{c8})O₂ (0.5<x20<1.3, 0<a8<1, 0<b8<1, 0<c8<0.15, a8+b8+c8=1), Liₓ₂₁(Coₐ₉Mn_{b9}Al_{c9})O₂ (0.5<x21<1.3, 0<a9<1, 0<b9<1, 0<c9<0.15, a9+b9+c9=1), Liₓ₂₂(Ni_{1-y4}Al_{y4})O₂ (0.5<x22<1.3, 0≤y4<0.15), Liₓ₂₃(Co_{1-y5}Al_{y5})O₂ (0.5<x23<1.3, 0≤y5<0.15), Liₓ₂₄(Mn_{1-y6}Al_{y6})O₂ (0.5<x24<1.3, 0≤y6<0.15), and Liₓ₂₅(Niₐ₁₀Co_{b10}Mn_{c10}Al_{d10})O₂ (0.5<x25<1.3, 0<a10<1, 0<b10<1, 0<c10<1, 0<d10<0.15, a10+b10+c10+d10=1).

For example, a content of the cathode active material may be 80 wt% or more, or 80 to 97 wt%, based on a total weight of the cathode slurry.

The cathode slurry according to the present invention includes a conductive material in order to improve conductivity between cathode active material particles or with a cathode current collector and to compensate for a binder acting as a nonconductor.

For example, the conductive material may be one type or a mixture of two or more types of conductive materials selected from the group consisting of graphite, carbon black, carbon fiber, metal fiber, metal powder, conductive whisker, conductive metal oxide, activated carbon, and a polyphenylene derivative, and more specifically, may be one type or a mixture of two or more types of conductive materials selected from the group consisting of natural graphite, artificial graphite, Super-P, acetylene black, Ketjen black, channel black, furnace black, lamp black, thermal black, Denka black, aluminum powder, nickel powder, zinc oxide, potassium titanate, and titanium oxide.

For example, a content of the conductive material may be 1 to 30 wt% based on a total weight of the cathode slurry.

The cathode slurry according to the present invention includes an aqueous solvent harmless to a human body in order to replace an organic solvent harmful to a human body, such as NMP. For example, the aqueous solvent may include water.

In general, in the case of a cathode slurry including an aqueous solvent, there were problems in that Li leaching occurs and a current collector composed of a metal material is easily corroded. According to one aspect of the present invention, by adding an organic acid including a carboxyl group and a sulfonic acid group to a cathode slurry including an aqueous solvent, it is possible to suppress Li leaching by removing residual lithium on a surface of a cathode active material, and a corrosion problem of a current collector can be solved as pH of the cathode slurry is adjusted to an appropriate level.

According to another embodiment of the present invention, the cathode slurry may further include a dispersant. For example, the dispersant may be an anionic component containing one or more salts selected from the group consisting of a carbonate, a phosphate, a sulfonate, and a sulfate, or may be a cationic component containing an ammonium salt. The dispersant may be determined according to a surface charge of the cathode active material.

According to another embodiment of the present invention, a drying temperature of the cathode slurry may be 100°C or more, 110°C or more, or 120°C or more. Specifically, as the drying temperature of the cathode slurry satisfies within the numerical range, an ester bond formation reaction between the organic acid and the polysaccharide binder can proceed well.

### 2. Cathode

According to another aspect of the present invention, there is provided a cathode including a current collector; and a cathode active material layer on the current collector, wherein the cathode active material layer includes a polysaccharide binder including one or more side chains, a cathode active material, and a conductive material, and the one or more side chains include an ester group and a sulfonic acid group.

The cathode active material is a compound capable of reversible lithiation and de-lithiation of lithium, and specifically may include a lithium composite metal oxide including lithium and one or more metals such as cobalt, manganese, nickel, or aluminum. More specifically, the lithium composite metal oxide may include a lithium-manganese-based oxide (for example, LiMnO₂, LiMn₂O₄, and the like), a lithium-cobalt-based oxide (for example, LiCoO₂, and the like), a lithium-nickel-based oxide (for example, LiNiO₂, and the like), a lithium-nickel-manganese-based oxide (for example, LiNi_{1-Y}Mn_{Y}O₂ (here, 0<Y<1), LiMn_{2-z}Ni_{z}O₄ (here, 0<Z<2), and the like), a lithium-nickel-cobalt-based oxide (for example, LiNi_{1-Y1}Co_{Y1}O₂ (here, 0<Y1<1), and the like), a lithium-manganese-cobalt-based oxide (for example, LiCo_{1-Y2}Mn_{Y2}O₂ (here, 0<Y2<1), LiMn_{2-z1}Co_{z1}O₄ (here, 0<Z1<2), and the like), a lithium-nickel-manganese-cobalt-based oxide (for example, Li(NiₚCo_{q}Mnᵣ₁)O₂ (here, 0<p<1, 0<q<1, 0<r1<1, p+q+r1=1) or Li(Niₚ₁Co_{q1}Mnᵣ₂)O₄ (here, 0<p1<2, 0<q1<2, 0<r2<2, pl+q1+r2=2), and the like), or a lithium-nickel-cobalt-transition metal (M) oxide (for example, Li(Niₚ₂Co_{q2}Mnᵣ₃Mₛ₂)O₂ (here, M is selected from the group consisting of Al, Fe, V, Cr, Ti, Ta, Mg, and Mo, and p2, q2, r3, and s2 are atomic fractions of respective independent elements, where 0<p2<1, 0<q2<1, 0<r3<1, 0<s2<1, and p2+q2+r3+s2=1)), and the like, and any one or two or more compounds thereof may be included.

Among these, in that capacity characteristics and stability of a battery can be increased, the lithium composite metal oxide may be LiCoO₂, LiMnO₂, LiNiO₂, a lithium nickel manganese cobalt oxide (for example, Li(Ni_{1/3}Mn_{1/3}Co_{1/3})O₂, Li(Ni_{0.6}Mn_{0.2}Co_{0.2})O₂, Li(Ni_{0.5}Mn_{0.3}Co_{0.2})O₂, Li(Ni_{0.7}Mn_{0.15}Co_{0.15})O₂, and Li(Ni_{0.8}Mn_{0.1}Co_{0.1})O₂, and the like), or a lithium nickel cobalt aluminum oxide (for example, Li(Ni_{0.8}Co_{0.15}Al_{0.05})O₂, and the like).

The cathode active material is a compound capable of reversible lithiation and de-lithiation of lithium, and specifically may include a lithium composite metal phosphate including lithium and metals such as manganese, nickel, aluminum, magnesium, zinc, and vanadium together with iron or cobalt. More specifically, the lithium composite metal phosphate may include a lithium iron phosphate-based phosphate (for example, LiFePO₄, and the like), a lithium cobalt phosphate-based phosphate (for example, LiCoPO₄, and the like), a lithium manganese phosphate-lithium iron phosphate-based phosphate (for example, LiMn_{1-Y}Fe_{Y}PO₄ (here, 0.15<Y<0.85, and the like), a lithium transition metal phosphate-lithium manganese phosphate-lithium iron phosphate-based phosphate (for example, LiMnₚFe_{q}MᵣPO₄ (here, M is selected from the group consisting of Al, Mg, Zn, and V, and 0<p<1, 0<q<1, 0<r<1, and p+q+r=1), and the like), and the like, and any one or two or more compounds thereof may be included.

Among these, in that capacity characteristics and stability of a battery can be increased, the lithium composite metal phosphate may be LiFePO₄, LiCoPO₄, or a lithium manganese iron phosphate (for example, LiMn_{0.8}Fe_{0.2}PO₄, LiMn_{0.6}Fe_{0.4}PO₄, LiMn_{0.5}Fe_{0.5}PO₄, and the like), or a lithium manganese iron aluminum phosphate (for example, LiMn_{0.45}Fe_{0.5}Al_{0.05}PO₄, and the like).

Meanwhile, according to some embodiments of the present invention, by including an ester group and a sulfonic acid group in the one or more side chains, it is possible to increase coverage of a polysaccharide binder-organic acid with respect to a surface of a cathode active material. Accordingly, it is possible to form a CEI (Cathode electrolyte interphase) having excellent performance to lower resistance of an electrode and at the same time improve cycle life characteristics of a secondary battery. Specifically, the ester group can increase adhesion between a current collector and a cathode active material layer, and the sulfonic acid group can implement excellent lithium ion conductivity. According to another aspect of the present invention, as the ester group and the sulfonic acid group are combined, it is possible to suppress Li leaching by removing residual lithium on the surface of the cathode active material, and a corrosion problem of the current collector can be solved as pH of the cathode slurry is adjusted to an appropriate level.

Specifically, the ester group included in the one or more side chains may be formed as a hydroxy group (-OH) included in one side chain of the polysaccharide and a carboxyl group (-COOH) of the organic acid react under a high-temperature drying temperature condition of the cathode slurry.

For example, the current collector is not particularly limited as long as it has high conductivity without causing a chemical change in a battery. Specifically, as the cathode current collector, copper, stainless steel, aluminum, nickel, titanium, baked carbon, one obtained by surface-treating a surface of copper or stainless steel with carbon, nickel, titanium, silver, or the like, an aluminum-cadmium alloy, and the like may be used. The cathode current collector may typically have a thickness of 6 to 20 µm.

According to another embodiment of the present invention, the one or more side chains may further include a carboxyl group. Here, the carboxyl group may be an unreacted functional group that does not react with the polysaccharide binder.

According to another embodiment of the present invention, the cathode may further include a rubber-based polymer. In order to increase energy density of a battery including the cathode of the present invention, it is necessary to increase an amount of an active material loaded on a current collector, and when a large amount of a cathode active material is loaded on the current collector, hardness of an electrode is increased, which is disadvantageous in a subsequent battery assembly process. In this case, by additionally including the rubber-based polymer in the cathode slurry, hardness of the electrode can be somewhat alleviated, and processability of the battery assembly process can be improved.

For example, the rubber-based polymer may specifically include one or more compounds selected from latex rubber having an acrylate functional group including fluorine, styrene butadiene rubber (SBR), butadiene rubber (BR), a styrene ethylene butylene copolymer (SEBS), nitrile butadiene rubber (NBR), and ethyl cellulose.

According to an embodiment of the present invention, a content of the rubber-based polymer may be 50 to 100 wt% based on a total weight of the polysaccharide binder included in the cathode.

### 3. Secondary Battery

According to another aspect of the present invention, there is provided a secondary battery including a cathode according to some embodiments; an anode; a separator interposed between the cathode and the anode; and an electrolyte. Since the description of the cathode has been described above, it will be omitted.

### Anode

The anode according to the present invention may include an anode current collector and an anode active material layer disposed on at least one surface of the anode current collector. The anode active material layer may include an anode active material, a conductive material, and an anode binder.

The anode current collector may serve as a path for transferring electrons from the outside so that an electrochemical reaction occurs in an anode active material, or for receiving electrons from the anode active material and sending the electrons to the outside. For example, copper, stainless steel, aluminum, nickel, titanium, baked carbon, or one obtained by surface-treating a surface of aluminum or stainless steel with carbon, nickel, titanium, silver, or the like may be used as the anode current collector, and specifically, a transition metal that well adsorbs carbon, such as copper or nickel, may also be used as the current collector. For example, a thickness of the anode current collector may be 6 µm to 20 µm, but the thickness of the anode current collector is not limited thereto.

The anode active material may store or release lithium ions and serve to generate electricity. For example, the anode active material may include at least one of silicon-based active material particles and graphite-based active material particles.

The silicon-based active material particles may use one or more selected from the group consisting of Si, SiOx (0<x<2), an Si-C composite, and an Si-Y alloy (Y is any one element selected from the group consisting of an alkali metal, an alkaline earth metal, a transition metal, a Group 13 element, a Group 14 element, and a rare earth element).

The graphite-based active material particles may include one or more selected from the group consisting of artificial graphite, natural graphite, graphitized carbon fiber, and graphitized mesocarbon microbeads.

A content of the anode active material may be 80 to 97 wt% based on total solids included in the anode active material layer.

The conductive material can improve conductivity between active material particles or with a metal current collector in an electrode and can prevent a binder from acting as a nonconductor. The conductive material may be, for example, one type or a mixture of two or more types of conductive materials selected from the group consisting of graphite, carbon black, carbon fiber, metal fiber, metal powder, conductive whisker, conductive metal oxide, activated carbon, and a polyphenylene derivative, and more specifically, may be one type or a mixture of two or more types of conductive materials selected from the group consisting of natural graphite, artificial graphite, Super-P, acetylene black, Ketjen black, channel black, furnace black, lamp black, thermal black, Denka black, aluminum powder, nickel powder, zinc oxide, potassium titanate, and titanium oxide.

The anode binder can suppress separation between anode active material particles or between an anode and a current collector. As the anode binder, a polymer commonly used for an electrode in the art may be used. Such anode binder may be, without limitation, poly(vinylidene fluoride-co-hexafluoropropylene), poly(vinylidene fluoride-co-trichloroethylene), poly(methylmethacrylate), poly(ethylhexylacrylate), poly(butylacrylate), poly(acrylonitrile), poly(vinylpyrrolidone), poly(vinyl acetate), poly(ethylene-co-vinyl acetate), poly(ethylene oxide), polyacrylate, cellulose acetate, cellulose acetate butyrate, cellulose acetate propionate, cyano ethyl pullulan, cyano ethyl poly(vinylalcohol), cyanoethylcellulose, cyano ethylsucrose, pullulan, and carboxyl methyl cellulose, and the like, but is not limited thereto.

### Separator

The separator according to the present invention includes a porous substrate in order to electrically insulate the anode and the cathode to prevent a short circuit.

The constituent material of the porous substrate may be used without particular limitation as long as it is an organic material or an inorganic material having electrical insulation properties. The porous substrate may include, for example, at least one selected from the group consisting of polyolefin, polyethylene terephthalate, polybutylene terephthalate, polyacetal, polyamide, polycarbonate, polyimide, polyether ether ketone, polyethersulfone, polyphenylene oxide, polyphenylene sulfide, and polyethylene naphthalene, and specifically may include polyolefin. Polyolefin not only has excellent coatability, but also can increase a ratio of an electrode active material layer in a battery by reducing thickness of a separator, thereby increasing capacity per volume. Specifically, a weight-average molecular weight (M_{w}) of the polyolefin may be 100,000 to 500,000 g/mol. When the weight-average molecular weight of the polyolefin is less than the numerical range, it may be difficult to secure sufficient mechanical properties, and when it exceeds the numerical range, a shut down function may not be implemented or molding may be difficult. The shut down function means a function of blocking movement of ions and preventing thermal runaway of a battery by melting a thermoplastic resin to close pores of a porous substrate when temperature of a secondary battery is increased.

A thickness of the porous substrate may be, for example, 3 to 12 µm or 5 to 12 µm. When the thickness of the porous substrate is less than the numerical range, a function of a conductive barrier may not be sufficient, and when it exceeds the numerical range, resistance of the separator may be excessively increased.

An average diameter of pores included in the porous substrate may be, for example, 10 to 100 nm. The pores included in the porous substrate have a structure connected to each other, such that a gas or a liquid can pass from one surface of the porous substrate to the other surface.

According to some embodiments of the present invention, a coating layer may be disposed on at least one surface of the porous substrate. Specifically, the coating layer can improve mechanical strength and heat resistance of the separator and can increase ion conductivity in the secondary battery.

The coating layer according to the present invention may include a binder polymer and inorganic particles.

The binder polymer according to the present invention can connect between inorganic particles and can stably fix the inorganic particles. The binder polymer may be, for example, used by mixing one type or two or more types selected from the group consisting of polyvinylidene fluoride-co-hexafluoropropylene, polyvinylidene fluoride-co-trichloroethylene, polymethylmethacrylate, polyacrylonitrile, polyvinylpyrrolidone, polyvinylacetate, poly(ethylene-co-vinyl acetate), polyethylene oxide, cellulose acetate, cellulose acetate butyrate, cellulose acetate propionate, cyanoethylpullulan, cyanoethylpolyvinylalcohol, cyanoethylcellulose, cyanoethylsucrose, pullulan, carboxyl methyl cellulose, an acrylonitrile-styrene butadiene copolymer, and polyimide.

According to another embodiment of the present invention, a weight ratio (inorganic particles:binder polymer) of the inorganic particles and the binder polymer may be 50:50 to 99:1, and specifically may be 70:30 to 95:5. When a content ratio of the inorganic particles to the binder polymer is less than the numerical range, content of the binder polymer is increased, such that performance of improving thermal safety of the separator can be reduced, and due to a decrease in an empty space formed between inorganic particles, pore size and porosity are decreased, thereby causing performance deterioration of the final battery, and when it exceeds the numerical range, content of the binder polymer is too small, such that peel resistance of the coating layer can be weakened.

The inorganic particles according to the present invention can contribute to improvement of mechanical strength and heat resistance of a separator for a secondary battery. Specifically, the inorganic particles are not particularly limited as long as they are electrochemically stable. That is, the inorganic particles that can be used in the present invention are not particularly limited as long as oxidation and/or reduction reactions do not occur in an operating voltage range of an applied secondary battery (for example, 0 to 5 V based on Li/Li+).

As an example, when inorganic particles having a high dielectric constant are used as the inorganic particles, it is possible to improve ion conductivity of an electrolyte by contributing to an increase in a degree of dissociation of an electrolyte salt in a liquid electrolyte, for example, a lithium salt. For the above-described reasons, the inorganic particles may be inorganic particles having a dielectric constant of 5 or more, inorganic particles having lithium ion transfer ability, or a mixture thereof.

The inorganic particles having a dielectric constant of 5 or more may be one type or a mixture of two or more types selected from the group consisting of Al₂O₃, SiO₂, ZrO₂, AlO(OH), Al(OH)₃, Mg(OH)₂, BaSO₄, TiO₂, BaTiO₃, Pb(ZrₓTi₁₋ₓ)O₃ (PZT, where 0<x<1), Pb₁₋ₓLaₓZr_{1-y}Ti_{y}O₃ (PLZT, where 0<x<1 and 0<y<1), (1-x)Pb(Mg_{1/3}Nb_{2/3})O₃₋ₓPbTiO₃ (PMN-PT, where 0<x<1), HfO₂, SrTiO₃, SnO₂, CeO₂, MgO, NiO, CaO, ZnO, and SiC.

The inorganic particles having lithium ion transfer ability may be one type or a mixture of two or more types selected from the group consisting of lithium phosphate (Li₃PO₄), lithium titanium phosphate (LiₓTi_{y}(PO₄)₃, 0<x<2, 0<y<3), lithium aluminum titanium phosphate (LiₓAl_{y}Ti_{z}(PO₄)₃, 0<x<2, 0<y<1, 0<z<3), (LiAlTiP)ₓO_{y}-based glass (0<x<4, 0<y<13), lithium lanthanum titanate (LiₓLa_{y}TiO₃, 0<x<2, 0<y<3), lithium germanium thiophosphate (LiₓGe_{y}P_{z}S_{w}, 0<x<4, 0<y<1, 0<z<1, 0<w<5), lithium nitride (LiₓN_{y}, 0<x<4, 0<y<2), an SiS₂-based glass (LiₓSi_{y}S_{z}, 0<x<3, 0<y<2, 0<z<4), and a P₂S₅-based glass (LiₓP_{y}S_{z}, 0<x<3, 0<y<3, 0<z<7).

For example, an average particle diameter (D50) of the inorganic particles may be 1 nm to 10 µm for formation of a coating layer having a uniform thickness and appropriate porosity, and specifically may be 10 nm to 2 µm, and more specifically may be 50 nm to 1 µm. The "average particle diameter (D50)" means a particle diameter at a 50% point in a cumulative distribution of the number of particles according to particle diameter. The average particle diameter may be measured using a laser diffraction method. Specifically, after dispersing powder to be measured in a dispersion medium, the powder may be introduced into a commercially available laser diffraction particle size analyzer (e.g., Microtrac S3500), and when particles pass through a laser beam, a difference in diffraction pattern according to particle size is measured to calculate a particle size distribution.

### Electrolyte

The electrolyte according to the present invention may include a solvent and a lithium salt.

The solvent according to the present invention may be, for example, one type or a mixture of two or more types selected from the group consisting of propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), gamma butyrolactone (GBL), fluoroethylene carbonate (FEC), methyl formate, ethyl formate, propyl formate, methyl acetate, ethyl acetate, propyl acetate, pentyl acetate, methyl propionate, ethyl propionate, ethyl propionate, and butyl propionate.

The lithium salt according to the present invention may include, for example, an anion such as NO³⁻, F⁻, Cl⁻, Br⁻, I⁻, PF6⁻, and the like.

The electrolyte according to the present invention may further include an additive, and specifically may include a compound containing a fluorine atom. For example, the additive may include one or more selected from the group consisting of LiBF₄, LiTFSI, and LiFSI.

Here, LiTFSI and LiFSI can form an LiF (lithium fluoride)-rich passivation film on a surface of lithium metal through a corrosion action, thereby increasing conductivity of lithium ions.

### Application

The secondary battery according to the present invention may be a cylindrical, prismatic, or pouch-type secondary battery, but is not particularly limited as long as it corresponds to a charging and discharging device.

Another embodiment of the present invention may provide a battery module including the secondary battery as a unit cell and a battery pack including the battery module. The battery pack may be used, for example, as a power source of one or more medium-to-large devices selected from the group consisting of a power tool; an electric vehicle including an electric vehicle (EV), a hybrid electric vehicle (HEV), and a plug-in hybrid electric vehicle (PHEV); or a power storage system.

Hereinafter, embodiments of the present invention will be described in detail so that a person having ordinary skill in the art to which the present invention pertains can easily carry out the present invention, but this is only one example, and the scope of rights of the present invention is not limited by the following content.

### [Preparation Example 1: Preparation of Cathode Slurry]

### Examples 1 and 2

A cathode slurry having total solid content of 73.5 wt% was prepared, respectively, by adding an organic acid described in Table 1 below (0.8 wt% based on total solid content included in the cathode slurry) and a solvent (water) to a mixture in which a cathode active material (LiNi_{0.8}Co_{0.1}Mn_{0.1}O₂, LiNi_{0.6}Co_{0.2}Mn_{0.2}O₂), a conductive material (Super-P), and carboxymethyl cellulose (CMC) were mixed at a weight ratio of 96:2:2.

### Examples 3 to 6

A cathode slurry was prepared in the same manner as in Example 1, except that a content of an organic acid was adjusted to a content described in Table 1 below, respectively.

### Comparative Example 1 to 3

A cathode slurry was prepared in the same manner as in Example 1, except that a type of an organic acid or an inorganic acid was changed to that described in Table 1 below, respectively. At this time, a content of the inorganic acid was set based on a weight of total solid content included in the cathode slurry.

### Reference Example

In the case of the Reference Example, a cathode slurry having total solid content of 61.8 wt% was prepared by adding a solvent (NMP) to a mixture in which a cathode active material (LiNi_{0.8}Co_{0.1}Mn_{0.1}O₂, LiNi_{0.6}Co_{0.2}Mn_{0.2}O₂), a conductive material (Super-P), and PVDF were mixed at a weight ratio of 96:2:2.

**[Table 1]**

| Category | Organic acid | Polysaccharide binder |
|---|---|---|
| Example 1(CMC-SSA 0.8 wt%) | Sulfosuccinic acid(SSA) | CMC |
| Example 2(CMC-SAA 0.8 wt%) | Sulfoacetic acid (SAA) | CMC |
| Example 3(CMC-SSA 0.6 wt%) | Sulfosuccinic acid (SSA) | CMC |
| Example 4(CMC-SSA 1.6 wt%) | Sulfosuccinic acid (SSA) | CMC |
| Example 5(CMC-SSA 0.3 wt%) | Sulfosuccinic acid (SSA) | CMC |
| Example 6(CMC-SSA 1.3 wt%) | Sulfosuccinic acid (SSA) | CMC |
| Comparative Example 1 | Succinic acid (SCA) | CMC |
| Comparative Example 2 | Ethanedisulfonic acid (EDSA) | CMC |
| Comparative Example 3 | Sulfuric acid (SfA) | CMC |
| Reference Example | - | PVDF |
| CMC: A binder having a degree of substitution of 0.7 to 0.9 and a weight-average molecular weight of 90,000 to 1,200,000 g/mol. | | |
| PVDF: Polyvinylidene fluoride having a weight-average molecular weight (Mw) of 500,000 g/mol. | | |

### [Preparation Example 2: Preparation of Cathode]

A cathode was prepared by coating each cathode slurry according to Preparation Example 1 above on an aluminum thin film having a thickness of 20 µm using a doctor blade and then drying at 120°C (overnight).

### [Preparation Example 3: Preparation of Half-Cell]

### Preparation of Anode and Cathode

Lithium metal having a thickness of 450 µm was prepared as an anode, and each cathode according to Preparation Example 2 above was prepared as a cathode.

### Preparation of Separator

A porous substrate (thickness: 15 µm) of a polyolefin material was prepared.

### Electrolyte Injection

After stacking in the order of the anode, the separator, and the cathode, lamination was performed to manufacture an electrode assembly.

### Preparation of Half-Cell

After putting the electrode assembly into a battery case, an electrolyte was injected to prepare a half-cell. Here, as the electrolyte, an electrolyte in which 1 M LiPF6 was dissolved in a mixed solvent in which ethylene carbonate and dimethyl carbonate were mixed at a volume ratio of 1:1 was used.

### [Experimental Example 1: Evaluation of Electrochemical Performance of Half-Cell]

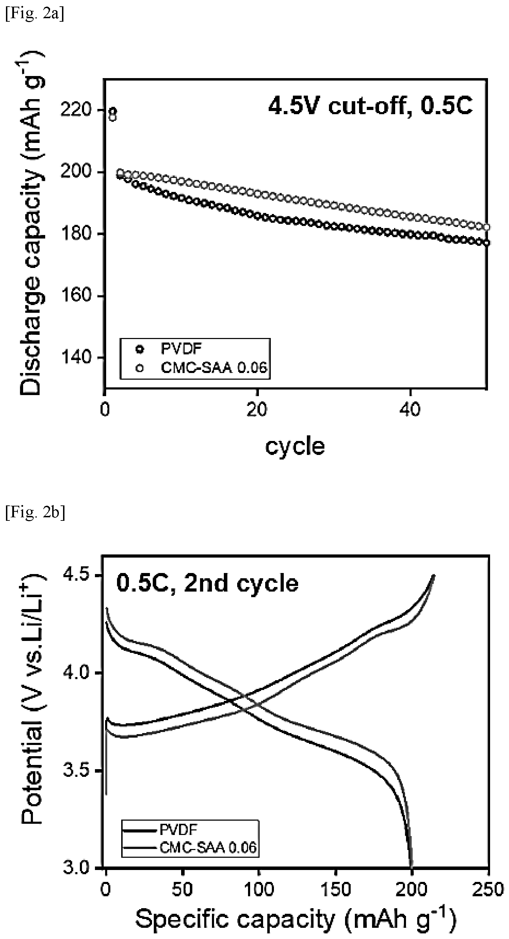

FIG. 2a compares cycle life performance of a half-cell according to Example 1 and a Reference Example under a cut-off voltage of 4.5 V and a 0.5C condition.

Referring to FIG. 2a, it can be confirmed that the half-cell according to Example 1 has a higher discharge capacity than the half-cell according to the Reference Example.

FIG. 2b illustrates voltage-capacity curves of a half-cell according to Example 1 and a Reference Example under a 0.5C and 2nd cycle condition.

Referring to FIG. 2b, it can be confirmed that the half-cell according to Example 1 has a lower over potential than the half-cell according to the Reference Example.

### [Experimental Example 2: Evaluation of cycle life Characteristics of Half-Cell]

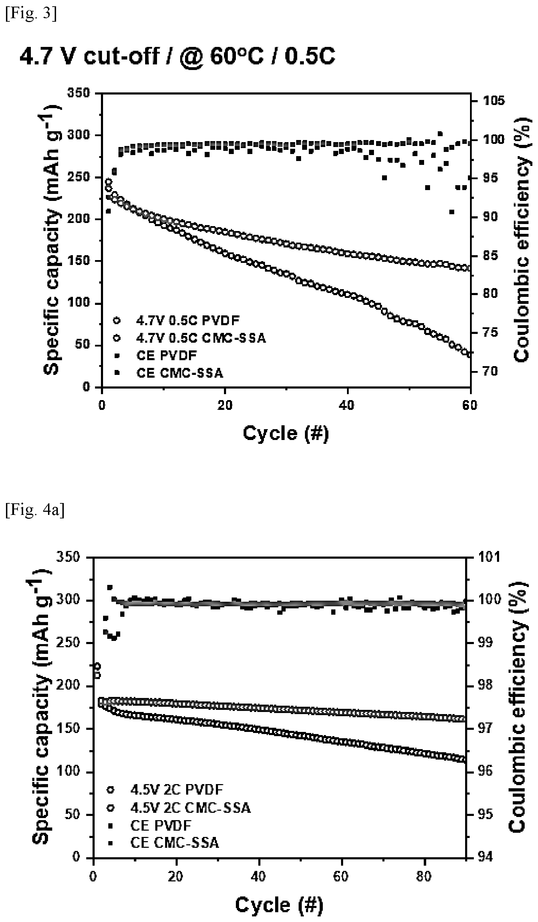

FIG. 3 compares cycle life performance and coulombic efficiency of a half-cell according to Example 1 and a Reference Example according to the number of cycles. Specifically, for Experimental Example 2, each half-cell was charged and discharged at 0.5C, a high voltage (4.7 V cut-off voltage), and a high temperature (60°C).

Referring to FIG. 3, it can be confirmed that the half-cell according to Example 1 not only exhibits a higher coulombic efficiency than the half-cell according to the Reference Example, but also exhibits more excellent cycle life performance. Through this, it can be confirmed that cycle life performance was remarkably improved by using a polysaccharide binder-organic acid

### [Experimental Example 3: Evaluation of Rate Characteristics of Half-Cell]

FIG. 4a illustrates cycle life performance of a half-cell according to Example 1 and a Reference Example. Specifically, Experimental Example 3 was performed under a 4.5 V cut-off voltage and a 2C condition.

Referring to FIG. 4a, it can be confirmed that the half-cell according to Example 1 not only exhibits a higher coulombic efficiency than the half-cell according to the Reference Example, but also exhibits more excellent cycle life performance.

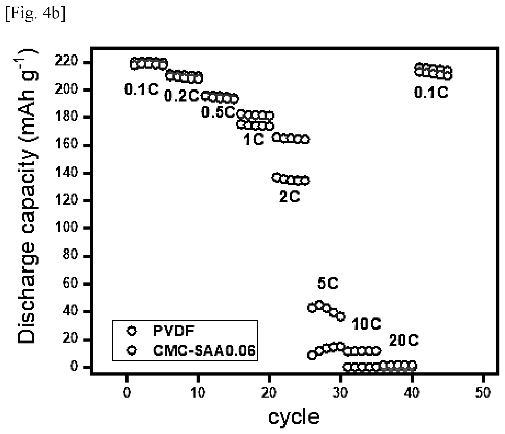

FIG. 4b compares rate characteristics of a half-cell according to Example 1 and a Reference Example. The discharge capacity test was performed under a 4.5 V cut-off voltage condition.

Referring to FIG. 4b, it can be confirmed that even when charge/discharge rates are varied from 0.1C to 20C, discharge capacity of the half-cell according to Example 1 is generally higher than that of the half-cell according to the Reference Example. Through this, it can be inferred that excellent rate characteristics are implemented by using a polysaccharide binder-organic acid.

### [Experimental Example 4: Evaluation of Discharge Capacity of Half-Cell According to Type of Binder or Organic Acid]

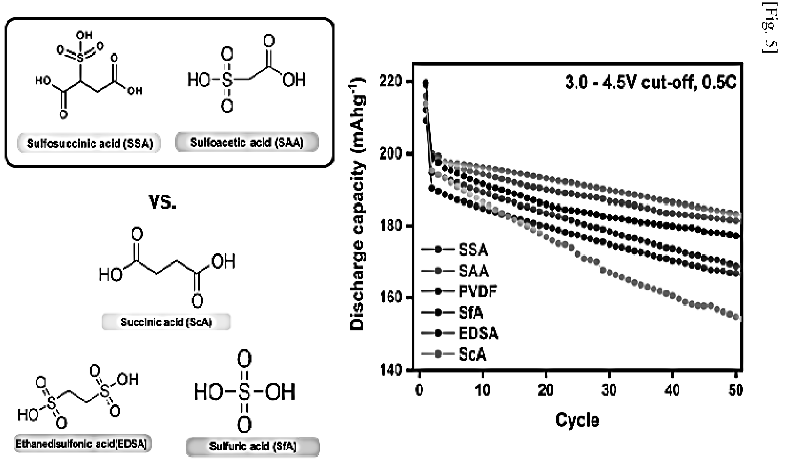

FIG. 5 compares cycle life performance of a half-cell according to Examples 1 and 2, Comparative Examples 1 to 3, and a Reference Example. Specifically, the discharge capacity test was performed under a cut-off voltage of 3.0 to 4.5 V and a 0.5C condition.

Referring to FIG. 5, it can be confirmed that the half-cells according to Examples 1 and 2 exhibit excellent cycle life performance compared to the half-cells according to Comparative Examples 1 to 3 and the Reference Example.

In addition, when Examples 1 and 2 are compared from the viewpoint of a type of an organic acid, it can be confirmed that the half-cell according to Example 2 exhibits excellent cycle life performance compared to the half-cell according to Example 1 as one carboxyl group and one sulfonic acid functional group are each included in one molecule of the organic acid.

### [Experimental Example 5: Evaluation of Electrochemical Performance of Half-Cell According to Content of Organic Acid]

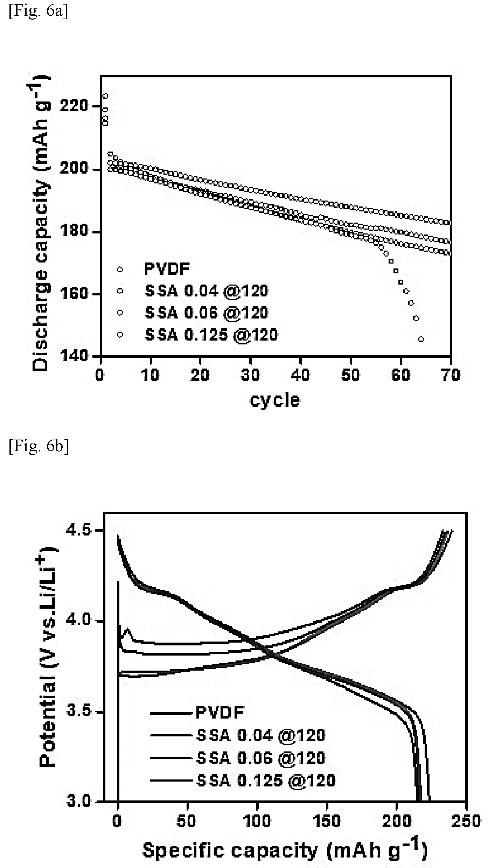

FIG. 6a illustrates discharge capacity of a half-cell according to Examples 1, 3, and 4 and a Reference Example.

Referring to FIG. 6a, it can be confirmed that the half-cell according to Example 1, in which a concentration of sulfosuccinic acid (SSA) is 0.8 wt% based on a total weight of an electrode (= total solid content of the cathode slurry), exhibits excellent cycle life performance compared to the half-cell according to the Reference Example and the half-cells according to Examples 3 and 4. In consideration of the above experimental results, it can be inferred that there exists an optimized content of an organic acid capable of implementing excellent cycle life performance of a battery.

### [Experimental Example 6: SEM Photographs of Electrode Surface]

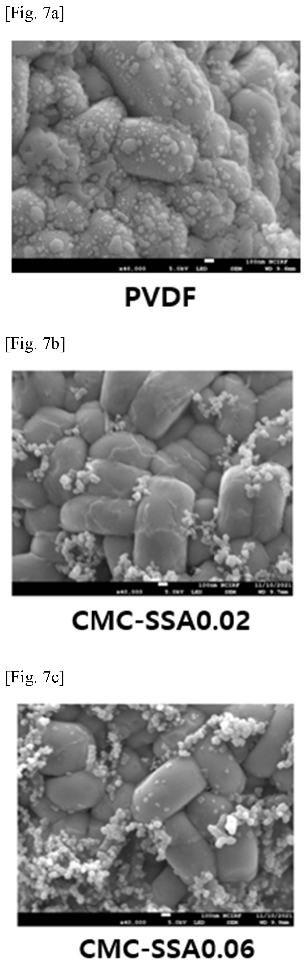

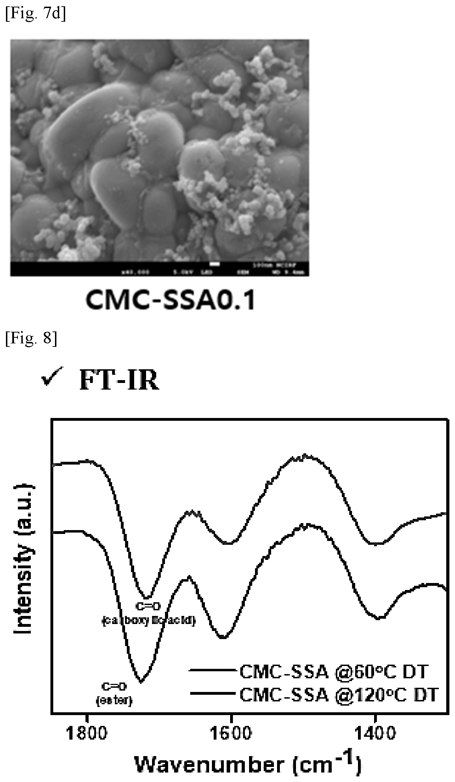

FIG. 7a is an SEM photograph of a surface of a cathode manufactured by a method according to a Reference Example. FIG. 7b is an SEM photograph of a surface of a cathode manufactured by a method according to Example 5. FIG. 7c is an SEM photograph of a surface of a cathode manufactured by a method according to Example 1. FIG. 7d is an SEM photograph of a surface of a cathode manufactured by a method according to Example 6.

Referring to FIGS. 7a to 7d, it can be confirmed that residual lithium is well removed on a surface of a cathode active material included in the cathode manufactured by the method according to Example 1.

### [Experimental Example 7: FT-IR of Polysaccharide Binder-Organic Acid]

FIG. 8 illustrates FT-IR of a polysaccharide binder-organic acid manufactured by a method according to Example 1 when a drying temperature of a cathode slurry is different as 60°C and 120°C, respectively.

Referring to FIG. 8, it can be confirmed that as the cathode slurry is dried at 120°C, the organic acid forms an ester bond with the polysaccharide binder.

### [Experimental Example 8: Evaluation of Adhesion to Current Collector]

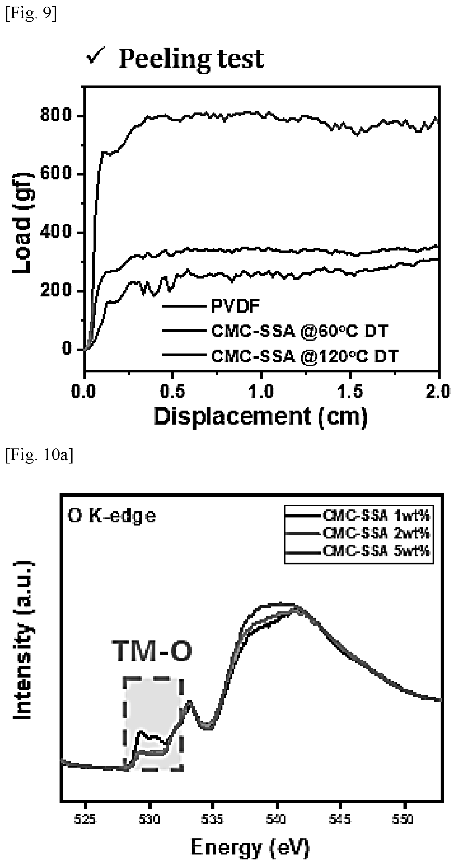

FIG. 9 illustrates a peeling test of peeling force of a cathode active material layer with respect to a current collector in a cathode manufactured by a method according to a Reference Example and Example 1.

Referring to FIG. 9, in the case of the cathode manufactured by the method according to Example 1, it can be confirmed that both cathodes manufactured by the method according to Example 1 in which a drying temperature of the cathode slurry is set to 60°C and 120°C implement higher adhesion to the current collector than the cathode manufactured by the method according to the Reference Example.

Specifically, when the drying temperature of the cathode slurry is 120°C, it can be confirmed that adhesion of the cathode active material layer to the current collector is remarkably increased as an ester bond is formed between the polysaccharide and the organic acid. Through this, it can be inferred that stronger adhesion is implemented because residual organic acid monomers do not interfere with an interaction between the current collector and the binder.

### [Experimental Example 9: Measurement of Surface Coverage of Cathode Active Material According to Type and Content of Binder]

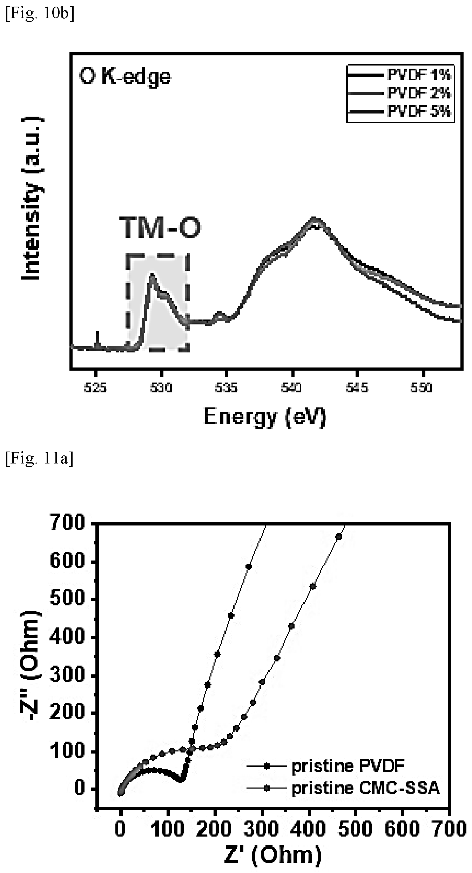

FIG. 10a illustrates respective TM-O peaks when a concentration of a polysaccharide binder is 1, 2, and 5 wt% based on a total weight of solids in a cathode manufactured by a method according to Example 1. FIG. 10b illustrates respective TM-O peaks when a concentration of a polysaccharide binder is 1, 2, and 5 wt% based on a total weight of solids in a cathode manufactured by a method according to a Reference Example. In order to analyze the TM-O peak, the evaluation was performed using beamline X-ray absorption analysis at Pohang Accelerator Laboratory as analysis equipment, under analysis conditions of soft X-ray and ultrahigh vacuum (~10⁻⁹ bar).

Referring to FIGS. 10a and 10b, it can be confirmed that the cathode manufactured by the method according to Example 1 has a TM-O peak detected to be lower than the cathode manufactured by the method according to the Reference Example. Through this, it can be inferred that surface coverage of the binder is increased when a cathode manufactured with a polysaccharide binder-organic acid is used.

### [Experimental Example 10: Evaluation of Interfacial Resistance According to Number of Cycles]

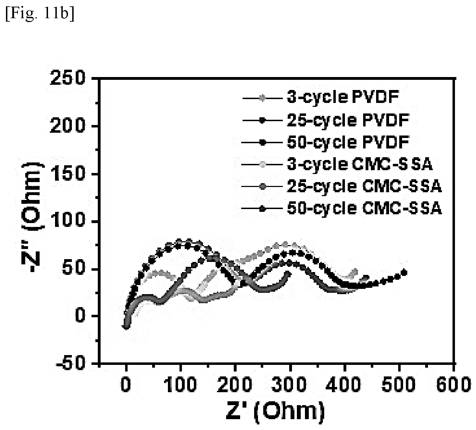

FIG. 11a is an electrochemical impedance measurement graph of a pristine electrode according to Example 1 and a Reference Example. FIG. 11b is an electrochemical impedance measurement graph of an electrode according to Example 1 and a Reference Example.

Referring to FIGS. 11a and 11b, a pristine electrode is an electrode in a state before a CEI (Cathode electrolyte interphase) is formed, and resistance of the pristine electrode according to Example 1 was measured to be higher than that of the pristine electrode according to the Reference Example. However, in the case of Example 1, as the CEI is formed, it can be inferred that high coverage of the polysaccharide binder-organic acid suppresses side reactions of the electrolyte to form a CEI having more excellent performance. Accordingly, it was confirmed that resistance of the electrode is reduced.

In comprehensive consideration of the above experimental results, according to one aspect of the present invention, as a structure derived from an organic acid having a carboxyl group and a sulfonic acid group is included in one side chain of a polysaccharide binder, it is possible to increase coverage of a polysaccharide binder-organic acid with respect to a surface of a cathode active material. Accordingly, it is possible to form a CEI (Cathode electrolyte interphase) having excellent performance to lower resistance of an electrode and at the same time improve cycle life characteristics of a secondary battery. Specifically, the carboxyl group of the organic acid can increase adhesion between a current collector and a cathode active material layer, and the sulfonic acid group of the organic acid can implement excellent lithium ion conductivity. As the carboxyl group and the sulfonic acid group of the organic acid are combined, it is possible to suppress Li leaching by removing residual lithium on the surface of the cathode active material, and a corrosion problem of the current collector can be solved as pH of the cathode slurry is adjusted to an appropriate level.

Although the preferred embodiments of the present invention have been described in detail above, the scope of rights of the present invention is not limited thereto, and various modifications and improvements by those skilled in the art using the basic concept of the present invention defined in the following claims also belong to the scope of rights of the present invention.

[National Research and Development Project Supporting This Invention]
[Unique Project Number] 1711192947
[Project Number] 2020M3H4A3081889
[Ministry] Ministry of Science and ICT
[Project Management (Specialized) Institution] National Research Foundation of Korea
[Research Program Name] Nano Materials Technology Development
[Research Project Title] Development of binder and electrode manufacturing technology for high-voltage/high-capacity secondary battery cathodes
[Contribution Rate] 1/2
[Performing Institution] Korea Institute of Science and Technology
[Research Period] 2020.05.15 to 2024.12.31
[National Research and Development Project Supporting This Invention]
[Unique Project Number] 1711185103
[Project Number] 2021M3H4A3A02086100
[Ministry] Ministry of Science and ICT
[Project Management (Specialized) Institution] National Research Foundation of Korea
[Research Program Name] Nano Materials Technology Development
[Research Project Title] Research on binder and electrode plate technology for high-capacity silicon anodes
[Contribution Rate] 1/2
[Performing Institution] Korea Institute of Ceramic Engineering and Technology
[Research Period] 2021.05.15 to 2023.12.31

## Claims

1. A cathode slurry comprising: a polysaccharide binder; an organic acid; a cathode active material; a conductive material; and an aqueous solvent, wherein the organic acid includes a carboxyl group and a sulfonic acid group.

2. The cathode slurry of claim 1, wherein a weight-average molecular weight (Mw) of the polysaccharide binder is 90,000 to 1,500,000 g/mol.

3. The cathode slurry of claim 1, wherein, in one molecule of the organic acid, the number of the carboxyl groups and the number of the sulfonic acid groups are identical to each other.

4. The cathode slurry of claim 1, wherein the organic acid is a compound represented by the following General Formula 1: 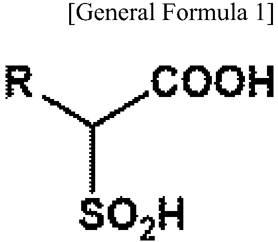 wherein, in General Formula 1, R includes a hydrogen atom or -R₁-COOH, and R₁ includes a substituted or unsubstituted main-chain linker having 1 to 5 carbon atoms.

5. The cathode slurry of claim 1, wherein the organic acid is any one selected from the group consisting of sulfosuccinic acid, sulfoacetic acid, and a combination thereof.

6. The cathode slurry of claim 1, wherein a content of the organic acid is 0.1 to 2 wt% based on a total solid content included in the cathode slurry.

7. The cathode slurry of claim 1, further comprising a dispersant.

8. The cathode slurry of claim 1, further comprising a rubber-based polymer.

9. A cathode comprising: a current collector; and a cathode active material layer on the current collector, wherein the cathode active material layer includes: a polysaccharide binder including one or more side chains; a cathode active material; and a conductive material, and wherein the one or more side chains include an ester group and a sulfonic acid group.

10. The cathode of claim 9, wherein the one or more side chains further include a carboxyl group.

11. The cathode of claim 9, wherein the cathode active material layer further includes a rubber-based polymer.

12. The cathode of claim 9, wherein the cathode active material is one or more selected from the group consisting of Liₓ₁CoO₂ (0.5<x1<1.3), Liₓ₂NiO₂ (0.5<x2<1.3), Liₓ₃MnO₂ (0.5<x3<1.3), Liₓ₄Mn₂O₄ (0.5<x4<1.3), Liₓ₅(Niₐ₁Co_{b1}Mn_{c1})O₂ (0.5<x5<1.3, 0<a1<1, 0<b1<1, 0<c1<1, a1+b1+c1=1), Liₓ₆Ni_{1-y1}Co_{y1}O₂ (0.5<x6<1.3, 0<y1<1), Liₓ₇Co_{1-y2}Mn_{y2}O₂ (0.5<x7<1.3, 0≤y2<1), Liₓ₈Ni_{1-y3}Mn_{y3}O₂ (0.5<x8<1.3, 0≤y3<1), Liₓ₉(Niₐ₂Co_{b2}Mn_{c2})O₄ (0.5<x9<1.3, 0<a2<2, 0<b2<2, 0<c2<2, a2+b2+c2=2), Liₓ₁₀Mn_{2-z1}Ni_{z1}O₄ (0.5<x10<1.3, 0<z1<2), Liₓ₁₁Mn_{2-z2}Co_{z2}O₄ (0.5<x11<1.3, 0<z2<2), Liₓ₁₂FePO₄ (0.5<x12<1.3), Liₓ₁₃CoPO₄ (0.5<x13<1.3), Liₓ₁₄Mn_{1-w1}Fe_{w1}PO₄ (0.5<x14<1.3, 0.15<w1<0.85), Liₓ₁₅Mnₐ₃Fe_{b3}Al_{c3}PO₄ (0.5<x15<1.3, a3+b3+c3=1), Liₓ₁₆Mnₐ₄Fe_{b4}Mg_{c4}PO₄ (0.5<x16<1.3, a4+b4+c4=1), Liₓ₁₇Mnₐ₅Fe_{b5}Zn_{c5}PO₄ (0.5<x17<1.3, a5+b5+c5=1), Liₓ₁₈Mnₐ₆Fe_{b6}V_{c6}PO₄ (0.5<x18<1.3, a6+b6+c6=1), Liₓ₁₉(Niₐ₇Co_{b7}Al_{c7})O₂ (0.5<x19<1.3, 0<a7<1, 0<b7<1, 0<c7<0.15, a7+b7+c7=1), Liₓ₂₀(Niₐ₈Mn_{b8}Al_{c8})O₂ (0.5<x20<1.3, 0<a8<1, 0<b8<1, 0<c8<0.15, a8+b8+c8=1), Liₓ₂₁(Coₐ₉Mn_{b9}Al_{c9})O₂ (0.5<x21<1.3, 0<a9<1, 0<b9<1, 0<c9<0.15, a9+b9+c9=1), Liₓ₂₂(Ni_{1-y4}Al_{y4})O₂ (0.5<x22<1.3, 0≤y4<0.15), Liₓ₂₃(Co_{1-y5}Al_{y5})O₂ (0.5<x23<1.3, 0≤y5<0.15), Liₓ₂₄(Mn_{1-y6}Al_{y6})O₂ (0.5<x24<1.3, 0≤y6<0.15), and Liₓ₂₅(Niₐ₁₀Co_{b10}Mn_{c10}Al_{d10})O₂ (0.5<x25<1.3, 0<a10<1, 0<b10<1, 0<c10<1, 0<d10<0.15, a10+b10+c10+d10=1).

13. A secondary battery comprising: the cathode according to claim 9; an anode; a separator interposed between the cathode and the anode; and an electrolyte.
